# EUROPÄISCHE PATENTSCHRIFT

(11) **EP 0 661 368 B1**
(45) Veröffentlichungstag und Bekanntmachung des Hinweises auf die Patenterteilung: **27.12.1996**
(21) Anmeldenummer: 95103427.1
(22) Anmeldetag: 24.10.1991
(51) Int. Cl.: C10B 53/00

(54) **Verfahren zur Nutzbarmachung von Abfällen, bei dem Abfälle thermisch behandelt und einer vollständigen Stoffumwandlung zugeführt werden**
Process for the valorisation of waste whereby the waste is thermally treated and subjected to a complete conversion of substances
Procédé de valorisation de déchets dans lequel les déchets sont traités thermiquement et soumis à une transformation complète de substances

(30) Priorität: 18.06.1991 DE 4120061; 10.09.1991 DE 4130416
(43) Veröffentlichungstag der Anmeldung: 05.07.1995
(62) Teilanmeldung aus: 91118158.4
(73) Patentinhaber: THERMOSELECT AKTIENGESELLSCHAFT, FL-9490 Vaduz (LI)
(72) Erfinder: Kiss, Günter H., ch-6648 Minusio (CH)
(74) Vertreter: Pfenning, Meinig & Partner

(56) Entgegenhaltungen:
- EP-A- 0 443 596
- WO-A-81/03629
- WO-A-87/01792
- DE-A- 3 207 203
- GB-A- 1 452 037

## Beschreibung

Die Erfindung bezieht sich auf ein Verfahren zur Nutzbarmachung von Abfällen, bei dem Abfälle thermisch behandelt und einer vollständigen Stoffumwandlung zugeführt werden. Nach diesem Verfahren kann unsortierter, gegebenenfalls eine Vielzahl toxischer Komponenten enthaltender Müll aller Art mittels Hochtemperaturbehandlung in flüssige Form überführt werden und entsprechend ausgetragen und geeignet weiterbehandelt werden.

Die bekannten Verfahren der Abfallentsorgung bilden keine befriedigende Lösung der wachsenden Müllprobleme, sie sind ein wesentlicher Faktor der Umweltzerstörung.

Industriegüterwracks aus Verbundwerkstoffen, wie Kraftfahrzeuge und Haushaltsgeräte, aber auch Öle, Batterien, Lacke, Farben, toxische Schlämme, Medikamente und Krankenhausabfälle unterliegen gesonderten, gesetzlich streng vorgeschriebenen Entsorgungsmaßnahmen. Hausmüll hingegen ist ein unkontrolliertes heterogenes Gemisch, das nahezu alle Arten von Sondermüllfraktionen und organischen Bestandteilen enthalten kann, dessen Entsorgung in keinem Verhältnis zu seiner Umweltbelastung steht.

In Deponien wird Hausmüll mangelhaft gelagert, Faulgase und Kohlendioxid entweichen unkontrolliert in die Atmosphäre, schadstoffhaltige Flüssigkeiten und Eluate der deponierten Abfälle verseuchen das Grundwasser.

Um die zu behandelnde Müllmenge zu reduzieren, ist bereits vorgeschlagen worden, die organischen Bestandteile aus Hausmüll und Klärschlämmen zu kompostieren. Dabei bleibt unbeachtet, daß diese Organika heterogen sind und eine Vielzahl nicht abbaubarer toxischer Bestandteile wie Chemikalien, Arzneimittel-und Schwermetallrückstände enthalten, die im Kompost verbleiben und über Pflanzen und Tiere in den biologischen Kreislauf zurückgeführt werden.

Durch Recycling sogenannter Wertstoffe versucht man ebenfalls, die Müllmenge zu verringern. Unbeachtet hierbei bleiben die hohen Aufwendungen zum getrennten Sammeln und Aufbereiten dieser Abfälle; mit wiederholtem Recycling wachsen Kosten und Umweltbelastung bei reduzierter Verwertbarkeit der gewonnenen Produkte.

Abfallbeseitigungsverfahren gehen aus von der klassischen offenen Müllverbrennung in sogenannten Rostöwobei teilweise versucht wird, die Verbrennungsrückstände, d.h. die unbrennbaren festen Reste und Schwermetalle in umweltverträgliche Form zu überführen (vgl. "Müll und Abfall", Ausg. 2/89, Seiten 64 bis 70). Hierzu bedient man sich eine Hochtemperatur-Einschmelzverfahrens, bei dem bei Temperaturen von ca. 1300°C alle mineralischen Anteile der festen Reststoffe der Verbrennungsrückstände in ihren schmelzflüssigen Zustand überführt werden. In dieses Schmelzbad wird auch die in der Anlage anfallende Flugasche eingebracht, woraufhin die Schmelze in ein Wasserbad granuliert wird. Die dabei entstehende feingranulierte verglaste Schlacke zeigt zunächst hinsichtlich ihrer Deponiefähigkeit äußert geringe Wasserlöslichkeit der in ihr eingeschlossenen Salze, Schwermetalle bzw. der Metallionen der toxischen Komponenten. Die Langzeit-Eluatbeständigkeit von in verglaster Schlacke eingeschlossenen toxischen Stoffen ist jedoch problematisch.

Bei den bekannten Müllverbrennungsanlagen durchlaufen die Entsorgungsgüter ein breites Temperaturfeld, wobei ein großer Anteil der mineralischen und metallischen Reststoffe nicht aufgeschmolzen wird. Die den verbleibenden Feststoffen innewohnende Energie wirdnicht genutzt. Die kurze Verweilzeit des Mülls bei höheren Temperaturen und die hohe Staubentwicklung durch Einblasen großer Mengen stickstoffreicher Verbrennungsluft in die unverdichteten Entsorgungsgüter begünstigen die gefährliche Bildung von chlorierten Kohlenwasserstoffen. Man ist deshalb dazu übergegangen, die Abgase von Müllverbrennungsanlagen einer Nachverbrennung bei höheren Temperaturen zu unterziehen. Um die hohen Investitionen solcher Anlagen zu rechtfertigen, werden die abrasiven und korrosiven heißen Abgase mit ihren hohen Staubanteilen durch Wärmetauscher geleitet. Bei der relativ langen Verweilzeit im Wärmetauscher bilden sich erneut chlorierte Kohlenwasserstoffe durch De-Novo-Syynthese, die sich mit den mitgeführten Stäuben verbinden und zu hochtoxischen Filtraten führen. Folgeschäden und die Kosten ihrer Beseitigung sind letztlich abschätzbar.

Trotz des hohen technischen Aufwandes beim bekannten Stand der Technik verbleiben nach der Verbrennung ca. 40% des zu entsorgenden Mülls in Form von Asche, Schlacken und hochtoxischen Filtraten, die in ihrer Gefährlichkeit mit radioaktiven Abfällen zu vergleichen sind und kostenintensiv entsorgt werden müssen. Um das zu deponierende Volumen zu reduzieren, ist es an sich bekannt, die metallischen Bestandteile der Reststoffe abzutrennen und einer gesonderten Verwertung zuzuführen. Die verbleibenden Aschen und Schlacken werden mit hohem Energieaufwand einem Hochtemperaturschmelzprozeß unterzogen. Die Schlacke ist, bedingt durch die aufzuschmelzenden heterogenen Ausgangsstoffe, inhomogen und enthält noch erhebliche Anteile organischer Reststoffpartikel, die, von der flüssigen Schmelze umschlossen, nicht oxidiert werden.

Durch schockartiges Abkühlen der Schmelze im Wasserbad entsteht ein heterogenes Schmelzgranulat, das an seinen thermischen Bruchstellen unkontrolliert zersplittert, so daß eingeschlossene Schadstoffe wieder eluierfähig werden. Ein hoher Energieaufwand von bisher ca. 200 Liter Heizöl pro Tonne Schmelze verbleibt ungenutzt, weil das so gewonnene Schmelzgranulat nur als Füllstoff im Straßenbau od.dgl. eingesetzt werden kann.

Schlacke, die in der Vergangenheit im Straßenbau, beim Bau von Sportanlagen oder Parkplätzen eingesetzt worden ist, hat insbesondere nach jüngsten wissenschaftlichen Erkenntnissen zu schweren Problemen hinsichtlich der Umweltbelastung, aber auch der Schädigung der Gesundheit von Mensch, Pflanze und Tier geführt. Die im Langzeitverhalten freiwerdenden Schwermetalle, aber auch hochtoxischen Gifte wie Dioxine und Furane zwangen zum Abriß solcher Anlagen in nicht wenigen Einzelfällen und damit zu sehr erheblichen Folgekosten der an sich schon durch hohen Fremd-Energieeinsatz gewonnenen bisherigen Endprodukte der Abfallentsorgung.

Die in das Grundwasser und letztlich auch in die Nahrungskette der Lebensmittel langfristig geratenden Schadstoffe potenzieren die latente Problematik um ein Mehrfaches.

Die bisher benutzten Pyrolyseverfahren in konventionellen Reaktoren haben ein der Müllverbrennung ähnlich breites Temperaturspektrum. In der Vergasungszone herrschen hohe Temperaturen. Die sich bildenden heißen Gase werden zur Vorwärmung des noch nicht pyrolysierten Entsorgungsgutes genutzt, kühlen hierbei ab und durchlaufen den für die Bildung chlorierter Kohlenwasserstoffe relevanten und damit gefährlichen Temperaturbereich.

Alle bekannten Pyrolyseverfahren von unsortiert zugeführten, nicht gebundenen und entwässerten Entsorgungsgütern ergeben keine hinreichend gasdurchlässige Bettschüttung, benötigen einen zu hohen Energieaufwand bei ungenügender Gasgewinnung und langer Verweilzeit im Reaktor. Aufgrund der thermischen Strömung und des inneren Gasdruckes kommt es zu hohen, große Filterkapazitäten erfordernden Staubbildungen. Soll Wassergas erzeugt werden, so muß in der Vergasungszone separat hergestellter Heißdampf, also Fremddampf, zugegeben werden. Die verbleibenden Feststoffe werden in der Regel nicht aufgeschmolzen, sondern müssen einer getrennten Entsorgung zugeführt werden und sind deshalb mit denen einer konventionellen Müllverbrennungsanlage vergleichbar.

Um ein ökologisch bedenkenlos nutzbares Reingas herzustellen, durchlaufen Pyrolysegase im Regelfall vor der Reinigung einen Cracker. Darüber hinaus ist es bekannt, durch Einsatz eines Wärmetauschers die den heißen Gase innewohnende Wärmeenergie zu nutzen. Hierbei entstehen durch die Verweilzeit der Gase im Wärmetauscher chlorierte Kohlenwasserstoffe, die bei der thermischen Nutzung des gewonnenen Gases freigesetzt werden.

Beim Einsatz von Schachtöfen zur Müllverbrennung ergibt sich u.a. der erhebliche Nachteil des Verklebens und der Brückenbildung der zu pyrolysierenden Entsorgungsgüter im Ofen, so daß solche Reaktoren mit mechanischen Hilfsmitteln wie Stocherstangen, Vibratoren und dergleichen auszurüsten sind, ohne daß hierdurch bisher das Problem befriedigend gelöst werden konnte.

Drehrohr- und Wirbelschichtvergaser führen darüber hinaus aufgrund des mechanischen Abriebs an den Ofenwandungen durch die teilweise scharfkantigen Entsorgungsgüter zu langen Stillstandszeiten, extrem hoher Staubbildung und benötigen technisch aufwendige gasdichte Schleusen. Es ergeben sich erhebliche Wartungsarbeiten mit entsprechend hohen Kosten.

Um die Nachteile der geschilderten Müllverbrennungs-und Pyrolyseverfahren zu vermeiden, ist es auch bereits bekannt, Abfälle und Giftstoffe über einem mineralischen oder metallischen Hochtemperatur-Schmelzbad zu zersetzen oder die Abfälle in ein solches Schmelzbad einzugeben, um auf diese Weise eine schnelle pyrolytische Zersetzung der Entsorgungsgüter bei hohen Temperaturen zu gewährleisten. Der wesentliche Nachteil einer solchen Verfahrensweise ist insbesondere darin zu sehen, daß eine Verwertung von flüssigen und/oder feuchten Abfällen aufgrund der explosionsartigen Verpuffungsgefahr ausscheidet, und daß aufgrund der entstehenden hohen Drücke die sich bildenden Gase keine genügend lange Verweilzeit in der Schmelze erreichen, um organische Schadstoffe sicher zu zerstören. Auch bei getrockneten unentgasten organischen Abfällen ist der Gasdruck durch die sich zersetzende Organika so hoch, daß keine ausreichend lange Verweilzeit gegeben ist. Die Schmelzprodukte sind nach kurzer Zeit mit nicht oxidierbaren, von Schmelzflüssigkeit umhüllten Kohlenstoffpartikeln gesättigt, so daß ein weiteres Zuführen von Entsorgungsgütern nicht sinnvoll ist.

Bei einem weiteren bekannten thermischen Verfahren zur Müllentsorgung werden zunächst mineralische und metallische von organischen Bestandteilen getrennt, die separierten Organika getrocknet und anschließend pulverisiert. Das gewonnene Pulver wird in ein Hochtemperatur-Schmelzbad oder einen Verbrennungsraum mit geeigneter Temperatur eingeführt und durch Einblasen von Sauerstoff oder mit Sauerstoff angereicherter Luft sofort zersetzt und dabei die Schadstoffe zerstört.

Dieses Verfahren führt zwar vom ökologischen Standpunkt her gesehen zu befriedigenden Ergebnissen, hat aber dennoch erhebliche Nachteile. So können beispielsweise keine flüssigen Abfälle und Entsorgungsgüter in Verbundstrukturen entsorgt werden. Auch sind die hierbei entstehenden Kosten nicht zu vertreten.

Gemeinsam weisen die vorbeschriebenen Verbrennungs-und Pyrolyseverfahren den Nachteil auf, daß sich die bei der Verbrennung oder pyrolytischen Zersetzung verdampften Flüssigkeiten oder Feststoffe mit den Verbrennungs- oder Pyrolysegasen vermischen und abgeleitet werden, bevor sie die zur Zerstörung aller Schadstoffe notwendige Termperatur und Verweilzeit im Reaktor erreicht haben. Das verdampfte Wasser ist nicht zur Wassergasbildung nutzbar gemacht. Deshalb werden im Regelfall bei Müllverbrennungsanlagen Nachverbrennungskammern, bei Pyrolyseanlagen Crackerstufen nachgeschaltet.

Aus der GB-A 1 452 037 ist ein weiteres Verfahren bekannt, bei dem Abfülle in einem Schachtofen pyrolytisch zersetzt werden und die erhaltenen festen Reststoffe mittels einer elektrischen Lichtbogenheizung aufgeschmolzen werden.

Mit der vorliegenden Erfindung soll ein Verfahren der eingangs genannten Art vorgeschlagen werden, das, bei beliebigem Ausgangsmaterial an Entsorgungsgütern in sich geschlossen, die vorgenannten Nachteile beseitigt, so daß keinerlei Umweltbelastung auftreten kann, und das gleichzeitig hochwertige, in ihrer Anwendungsvielfalt breitgefächerte halbfertige bzw. fertige Industrieprodukte aus den verbleibenden Reststoffen gewinnen läßt bei Minimierung des hierfür erforderlichen technischen Aufwandes und der Verfanrenskosten.

Die Lösung dieser Aufgabe wird erfindungsgemäß durch die im Kennzeichen des Anspruchs 1 angegebenen Merkmale erreicht.

Vorteilhafte Ausgestaltungen und Weiterbildungen dieses Verfahrens ergeben sich aus den übrigen Ansprüchen.

Dadurch, daß Industriegüterwracks, wie Kühlschränke, Waschmaschinen, Elektro- und Elektronikgeräte, unzerteilt, Kraftfahrzeuge in großstückige Portionen zerlegt, unter Beibehaltung ihrer Misch- und Verbundstruktur zusammen mit unsortiertem und unvorbehandeltem Schüttmüll und flüssigen Abfällen chargenweise sc komprimiert werden, daß das Hohlraumvolumen minimiert ist, gehen die festen Bestandteile der Entsorgungsgüter einen hohen mechanischen Verbund ein, und die vorhandenen überschüssigen Flüssigkeiten werden zusammen mit den entstehenden Kompaktpaketen mit in einen von außen beheizten länglichen Kanal gepreßt, wobei sich ein gasdichter Pfropfen vor dem Kanaleingang bildet, der Schleusenfunktion wegen seiner Gasundurchlässigkeit übernimmt. Die Flüssigkeiten müssen keiner gesonderten Entsorgung unterzogen werden, und thermisch ansonsten isolierende Luft muß nicht in den bekannten großen Volumina miterhitzt werden. Die Wärmeleitfähigkeit im durch Komprimieren gewonnenen Kompaktpaket wird durch metallische und mineralische Inhaltstoffe und hohe Dichte signifikant verbessert. Es werden hohe Entsorgungsleistungen auch bei kleiner Anlagenauslegung erreicht, ohne daß kostenintensive Vorbehandlungsverfahren, wie getrenntes Sammeln und technisch aufwendiges Aufbereiten, Shreddern, Trennen, Trocknen und Brikettieren, erforderlich sind.

Für den Verfahrensablauf ist es weiter kennzeichnend, daß die vorliegenden Kompaktpakete unter Aufrechterhaltung der Druckbeaufschlagung formschlüssig in einen auf über 100°C beheizten Kanal eingepreßt werden, wobei sie bei sich aufbauendem Gasdruck nur so lange in kraftschlüssigem Kontakt mit den Kanalwandungen gehalten werden, bis die mitgeführten Flüssigkeiten und leicht flüchtigen Stoffe verdampft und vorhandene Rückstellkräfte einzelner Komponenten aufgehoben sind und bis die mitgeführten organischen Bestandteile zumindest teilweise Bindemittelfunktion übernommen haben. Eine pyrolytische Zersetzung der organischen Bestandteile im Kanal muß beim vorliegenden Verfahren nicht erfolgen, wobei eine Teilzersetzung durchaus wünschenswert sein kann. Es genügt jedoch die Bindung aller Feinanteile und die Erzeugung form- und strukturstabiler, stückiger Konglomerate. Beim vorliegenden erfindungsgemäßen Verfahrensablauf entsteht nach kurzer Verweilzeit des Entsorgungsguts im beheizten Kanal ein kompakter Formstrang, in dem die mit dem Entsorgungsgut eingebrachten Feinanteile und Stäube gebunden werden, da durch ausreichend schnelle Gasentwicklung in den Randbereichen des Stranges mit erhöhtem Druck eine rasche Durchwärmung des Entsorgungsgutes sichergestellt wird und zumindest Komponenten organischer Bestandteile so plastifiziert werden, daß das Rückstellvermögen dieser Müllbestandteile aufgehoben wird. Entsprechend wird eine günstige Reaktionstemperatur über 100°C vorgegeben. Bei kraftschlüssigem Kontakt mit den Wandungen durchströmen die an der heißen Kanalwand und weiter innen sich bildenden Gase die Entsorgungsgüter-Pakete in Prozeßrichtung. Die Entsorgungsgüter verkleben, versintern und verbinden sich hierbei untereinander und geben ihre Feuchtigkeit ab, so daß staubfreie, form- und strukturstabile, brockige Konglomerate bis hin zum Austrittsende des Kanals entstehen. Diese brockig am Kanalende austretenden, in den Schacht eines Hochtemperaturvergasers hineinfallenden Feststoffkonglomerate bilden die Voraussetzung für eine gasdurchlässige, stuabfreie Bettschüttung in dem nachgeschalteten Hochtemperaturreaktor und eine hier erfolgende vollständige Hochtemperaturvergasung.

Die thermisch vorbehandelten Kompaktpakete werden erfindungsgemäß unmittelbar mit dem Austritt aus dem beheizten Kanal drucklos und vergleichbar mit Briketts in den Hochtemperaturvergasar gegeben. Der Hochtemperaturreaktor kennzeichnet sich dadurch, daß er über die Gesamtheit seines Volumens auf wenigstens 1000°c gehalten wird. Hierdurch werden schlagartig zumindest die Oberflächen der eintretenden Kompaktpakete bzw. von diesen abfallende, getrennte Brocken bezüglich ihrer organischen Bestandteile verkohlt. Die brikettierten Brocken formieren mit der ihr innewohnenden Energie in dem Hochtemperaturvergaser ein loses gasdurchlässiges Schüttbett.

Die Bildung explosiver Gasgemische ist im gesamten System durch die thermische Vorbehandlung im Kanal ausgeschlossen. Die Gesamtheit der gasförmigen und festen Entsorgungsgüter bleibt so lange einer Hochtemperaturbeaufschlagung unterworfen, bis alle thermisch reagierbaren Schadstoffe sicher zerstört sind. Dadurch, daß die organischen Bestandteile der Feststoffbrocken mindestens in den Außenbereichen bei Eintritt in den Hochtemperaturreaktor sofort pyrolytisch zersetzt werden, wird ein Verkleben der Schüttsäule, sowie Brückbildung und Ankleben an den Reaktorwänden vermieden. Über der Schüttung bildet sich ein kohlenstoffhaltiges Fließbett aus, durch das der Wasserdampf der mit der Kompaktierung mitgeführten Flüssigkeit des Ausgangsmaterials hindurchdringt, der im beheizten Kanal entsteht. Hierdurch wird vorteilhaft der Ablauf einer Wassergasreaktion gewährleistet, ohne daß Fremddampf benötigt wird. Die gasdurchlässige Schüttung bildet die Voraussetzungen für den gleichzeitigen Ablauf der bekannten Boudouard-Reaktion. Kohlendioxid, das beim Vergasen des Kohlenstoffs mit Sauerstoff entsteht, wird beim Durchdringen der Schüttsäule in Kohlenmonoxid transformiert.

Da der Hochtemperaturreaktor auch über dem Fließbett eine Temperatur von mindestens 1000°C aufweist, durch den alle Gase mit ausreichend langer Verweilzeit geleitet werden, ist gewährleistet, daß chlorierte Kohlenwasserstoffe sicher zerstört und langkettige Kohlenwasserstoffe gecrackt werden. Die Bildung von Kondensaten, wie Teere und Öle, wird zuverlässig verhindert.

Das mindestens 1000°C heiße Synthesegasgemisch wird unmittelbar nach Verlassen des Hochtemperaturreaktors schockartig auf 100°C abgekühlt und entstaubt, so daß die Neubildung von chlorierten Kohlenwasserstoffen ausgeschlossen werden kann.

Das Aufschmelzen der Feststoffbrocken mit der Hochtemperaturbeaufschlagung innerhalb des Reaktors erfolgt vorzugsweise bei Temperaturen bis zu 2000°C oder mehr. Diese Temperaturen entstehen bei der Kohlenstoffvergasung unter Zugabe von Sauerstoff.

In der Schmelzzone des Hochtemperaturreaktors unterhalb der Festbettschüttung werden die anorganischen Bestandteile, d.h. alle Gläser, Metalle und sonstigen Minerale, aufgeschmolzen. Ein Teil der in den Feststoffen enthaltenen Schwermetalle fällt bei der dosierten Sauerstoffzugabe in der reduzierenden Atmosphäre in elementarer Form an und bildet Legierungen mit anderen Komponenten der Schmelze. Die schmelzflüssige Form wird ausgetragen und gegebenenfalls fraktioniert.

Wenn bei der Hochtemperaturbehandlung bei exothermem Prozeßablauf der größte Teil des Pyrolysekokses verbrannt worden ist bzw. die Gesamtheit der oxidierbaren Komponenten der Reststoffe oxidiert wurde und die mineralischen Komponenten vollständig verflüssigt wurden, so geschieht das bei Temperaturen von ca. 1000°C und mehr. Die abgezogene Schmelze kennzeichnet sich bei unsortiert zugeführtem Entsorgungsgut jedoch noch durch eine weitgehend inhomogene Struktur. Höherschmelzende Komponenten, beispielsweise Kohlenstoff, aber auch bestimmte Metalle, liegen noch in ihrem festen Aggregatzustand vor und bilden Einschlüsse, so daß eine sinnvolle Verwertung dieser schlackeartigen Restprodukte nicht möglich ist.

Besonders vorteilhaft ist es daher und für das vorliegende Verfahren wesentlich, daß die in der schmelzflüssigen Form vorliegenden Restprodukte, die durchschnittlich noch ein Volumenprozent der Ausgangsentsorgungsgüter bilden, einer zusätzlichen Nachbehandlung unterworfen werden, in dem sie unter Nutzung des gewonnenen Synthesegases einem thermischen Homogenisierungsprozeß unterzogen werden. Hierbei wird die Schmelze bei Temperaturen um 1800°C in oxidierender Atmosphäre so lange geläutert, bis eine blasenfreie homogene Hochtemperaturschmelze vorliegt. In einer Verfahrensvariante kann die aus dem Hochtemperaturreaktor austretende inhomogene Schmelze zunächst in einem Sammelbehälter kräftig durchmischt werden oder die Durchmischung kann auch durch das Abfließen der Schmelze teilweise erfolgen. Das bei kontinuierlichem Verfahrensablauf anfallende ausreichende Schmelzvolumen kann während oder nach dem Läuterungsprozeß infolge Dichtetrennung falls gewünscht auch fraktioniert abgezogen werden. Mit der Hochtemperaturschmelze werden jegliche inhomogene Strukturen restlos beseitigt, so daß selbst Langzeiteluierbarkeit ausgeschlossen werden kann. Diese Hochtemperaturschmelze kennzeichnet sich durch eine vollständige Stoffwandlung bezüglich der Gesamtheit der ursprünglichen Ausgangsstoffe.

In einer weiteren Ausführungsform finden ein erstes Schmelzbad mit einer Temperatur von ca. 1300°C und ein diesem nachgeschaltetes zweites Schmelzbad mit einem Temperaturbereich von 1500°C bis 1800°C Anwendung. Erst das zweite Schmelzbad beseitigt jegliche inhomogenen Strukturen und ggf. im ersten Schmelzbad noch vorhanden toxischen Einschlüsse.

In besonders vorteilhafter Weise kennzeichnet sich das vorliegende Verfahren schließlich dadurch, daß das mit der Hochtemperaturschmelze gewonnene Produkt sich zu einer breiten Palette hochwertiger Industriegüter bzw. hochwertiger Halbfertigprodukte verarbeiten läßt. Aus der Schmelze wird unter Ausnutzung der ihr innewohnenden Energie, also ohne Zwischenabkühlung, ein hochwertiges naturnahes Industrieprodukt herstellbar. Beispielsweise läßt sich die Schmelze zu Mineralfasern verspinnen, aber auch hochwertige Maschinenteile, wie Zahnräder oder dergleichen, lassen sich durch Gießverfahren aus dieser Schmelze herstellen. Bekannte Ausformverfahren und Verformungsverfahren sind für andere hochwertige Industriegüter anwendbar. Mit Blähverfahren lassen sich Isolierkörper mit geringem Volumengewicht fertigen. Hierfür läßt sich die Viskosität der Hochtemperaturschmelze produktabhängig und verfahrensabhängig, also je nach Gieß-, Spinn-, Ausform- oder Verformungsprozeß, optimal vorgeben.

Nach dem vorstehend beschriebenen Verfahren ist erstmalig eine universelle Entsorung in umfassender Form möglich, bei der auf getrenntes Sammeln und Aufbereiten wie Shreddern, Trennen, Trocknen und Brikettieren sowie auf Recycling von sogenannten Werkstoffen aller Art verzichtet wird. Die mitgeführten Flüssigkeiten werden energetisch durch Wasser-Gas-Reaktion genutzt, die Gesamtheit der gasförmigen, flüssigen und festen Entsorgungsprodukte werden solange in einem Hochtemperaturreaktor auf einer Mindesttemperatur von über 1000°C gehalten, bis alle Schadstoffe thermisch zerstört sind. Die Rückbildung von chlorierten Kohlenwasserstoffen wird durch schockartiges Kühlen der Gase gänzlich ausgeschlossen und verbleibende, in flüssiger Form ausgetragene Reststoffe werden gegebenenfalls nach Abtrennung von Metallfraktionen unter Nutzung der ihnen innewohnenden Energie zu hochwertigen Industrieprodukten weiterverarbeitet.

Bei einem weiteren Ausführungsbeispiel wird Hausmüll in vorkompaktierter oder loser unsortierter Form nicht einem Durchlauf-Verschwelungsofen, sondern einem Niedertemperatur-Pyrolyseofen zugeführt, der im wesentlichen auch aus einer langgestreckten horizontalen Schachtkammer besteht, mit einem stirnseitigen Eintrittsende und einem stirnseitigen Austrittsende. Mittels Preßstempelbeaufschlagung wird das ungesichtete Entsorgungsgut in das Eintrittsende des Pyrolyseofens hinein verdichtet und in Übereinstimmung mit der intermittierend erfolgenden Einspeisung über die gesamte Länge des Ofenschachtes durch diesen hindurchgedrückt. Ein geeigneter Temperaturgradient, über die Länge des Ofenschachtes verteilt, stellt sicher, daß am Austrittsende die verdichteten und entgasten festen Reststoffe des Entsorgungsgutes in Form von festem Pyrolysekoks sowie mineralischen und metallischen Komponenten austreten. Unmittelbar mit dem Austritt dieser festen mineralischen, metallischen und organischen Komponenten der Reststoffe erfolgt eine ausreichende Sauerstoffbeaufschlagung. Die während der Druckpyrolyse, die bei Temperaturen um ca. 700°C erfolgt, nicht vergasten festen Reststoffe werden in einem nachgeschalteten Reaktor durch exotherme Oxidation weitgehend nachverbrannt bzw. oxidiert, verglast oder vergast. Es entsteht eine flüssige Schlacke, die nachfolgend in einem Wasserbad granuliert werden kann. Ein solches Granulat ist jedoch nicht frei von Einschlüssen und damit Inhomogenitäten, die sowohl mineralischer, metallischer oder sogar organischer Natur sein können. Infolge der schockartigen Abkühlung der Flüssigschlacke im Wasserbad zeigt ein solches Zwischenprodukt eine Vielzahl von Rissen, Platzflächen u.dgl., die auch giftige Inhomogenitäten freilegen und insofern die geforderte Eluatbeständigkeit der Hochtemperatur-Reststoffe zumindest langfristig nicht sicherstellen können.

Gemäß dieser Verfahrensvariante wird deshalb das in einem ersten Schmelzbad bei Temperaturen um 1300°C gewonnene Zwischenprodukt unter Ausnutzung der bei der Entgasung gewonnenen Primärenergie (Pyrolysegas) in eine zweite Hochtemperaturschmelze überführt, deren Temperatur höher als 1350°C liegt, vorzugsweise bei 1700°C oder darüber. Wenn nunmehr diese Hochtemperaturschmelze abgekühlt wird, entsteht ein keramikähnlicher Feststoff von vollständig homogener Struktur.

Es ist wesentlich für diesen Verfahrensablauf, daß die zweite Hochtemperaturschmelze in aller Regel nicht ohne zusätzliche Produktionsschritte abgekühlt wird, sondern daß vielmehr diese Schmelze unter Ausnutzung der ihr innewohnenden hohen Wärme-Energie weiterverarbeitet wird, beispielsweise zu einem faserartigen oder flächigen Zwischenprodukt, welches in vorteilhafter Weise industriell verwendbar ist. So ist es besonders vorteilhaft, die Faserprodukte als wertvolle Armierungen in Baustoffen oder für Isolierzwecke als Mineralwolle zu verwenden. Das mit der vorliegenden Verfahrensweise gewonnene Produkt vermag Aufgaben zu übernehmen, wie sie in der Vergangenheit nicht nur Asbestfasern, sondern auch hochwertigen Sinterstoffen, Hartmetallegierungen u.dgl. zugesprochen wurden.

Besonders vorteilhaft ist es beim vorliegenden Verfahren auch, wenn zwischen dem Verfahrensschritt des Granulierens der ersten Hochtemperaturschmelze und der erneuten Verflüssigung des Granulats eine Separierung einer oder mehrerer Metallkomponenten nach an sich herkömmlichen Separierungsverfahren vorgenommen wird, beispielsweise die wenigstens teilweise Abtrennung der eisenhaltigen Metallkomponenten aus der Schmelze erfolgt.

Für den Fall, daß aus der zweiten Hochtemperaturschmelze glasfaserähnliche Strukturen mit vorzugsweise unregelmäßigen Oberflächen gewonnen werden, ist es vorteilhaft, eine gekühlte Schleuderwalze mit geeignet strukturierter Oberfläche so in die Schmelze einzutauchen, daß die ausgeschleuderten Flüssigkeitsfäden eine besonders unregelmäßig querschnittsarme Struktur aufweisen. Anstelle der gekühlten Schleuderwalze ist auch denkbar, zwei Quetschwalzen oder einen rotierenden Teller zum Einsatz zu bringen. Die von diesen Anordnungen abfließenden Faserstrukturen können entsprechend der Umlaufgeschwindigkeit der Walze und der eingestellten Schmelzbadviskosität gewünscht verändert werden.

Das hier vorgeschlagene Verfahren bezieht sich nicht auf die Rückgewinnung der bei der Filtration der Abgase zurückgehaltenen Stäube bzw. deren Salzkomponenten.

Das nach dem vorstehend beschriebenen Verfahren gewonnene Produkt zeigt hinsichtlich seiner Eluatbeständigkeit die folgenden in der nachstehenden Tabelle zusammengefaßten Ergebnisse:

| | | | H2O - Eluat | | | Anforderung an inertstoff TVA | | Anforderung an Reststoff TVA | |
|---|---|---|---|---|---|---|---|---|---|
| | | | 24 h | 48 h | Mittelwert | | | | |
| pH-Wert | | | 7.20 | 7.14 | 7.17 | 6-12 | erfüllt | 6-12 | erfüllt |
| el. Leitfähigkeit | | µS/cm | 8.0 | 7.0 | 7.5 | k.Anford. | | k.Anford. | |
| Ammonium | NH4-N | mg/l | -0.050 | -0.050 | -0.050 | 0.5 | erfüllt | 5.0 | erfüllt |
| Cyanid | CN | mg/l | -0.01 | -0.01 | -0.01 | 0.01 | erfüllt | 0.10 | erfüllt |
| Fluorid | F | mg/l | -0.1 | -0.1 | -0.1 | 1 | erfüllt | 10 | erfüllt |
| Nitrit | NO₂ | mg/l | -0.005 | -0.005 | -0.005 | 0.1 | erfüllt | 1.0 | erfüllt |
| Sulfid | S | mg/l | -0.01 | -0.01 | -0.01 | 0.01 | erfüllt | 0.10 | erfüllt |
| Sulfit | SO₃ | mg/l | -0.1 | -0.1 | -0.1 | 0.1 | erfüllt | 1.0 | erfüllt |
| Phosphat | PO₄ | mg/l | -0.01 | -0.01 | -0.01 | 1 | erfüllt | 10 | erfüllt |
| Chlorid | Cl | mg/l | -1 | -1 | -1 | k.Anford. | | k.Anford. | |
| Sulfat | SO₄ | mg/l | -1 | -1 | -1 | k.Anford. | | k.Anford. | |
| DOC | C | mg/l | -1.0 | -1.0 | -1.0 | 20 | erfüllt | 50 | erfüllt |
| | | | | | | | | | |
| ACX* | Cl | µC/l | -1 | -1 | -1 | 10 | erfüllt | 50 | erfüllt |

| | | | CO2-Eluat | | | Anforderung an Inertstoff TVA | | Anforderung an Reststoff TVA | |
|---|---|---|---|---|---|---|---|---|---|
| | | | 24 h | 48 h | Mittelwert | | | | |
| Aluminium | Al | mg/l | 0.090 | 0.070 | 0.080 | 1 | erfüllt | 10 | erfüllt |
| Arsen | As | mg/l | -0.01 | -0.01 | -0.01 | 0.01 | erfüllt | 0.10 | erfüllt |
| Barium | Ba | mg/l | -0.050 | -0.050 | -0.050 | 0.5 | erfüllt | 5.0 | erfüllt |
| Blet | Pb | mg/l | -0.005 | -0.005 | -0.005 | 0.1 | erfüllt | 1.0 | erfüllt |
| Cadmium | Cd | mg/l | -0.001 | -0.001 | -0.001 | 0.01 | erfüllt | 0.10 | erfüllt |
| Chrom | Cr | mg/l | -0.005 | -0.005 | -0.005 | ** | erfüllt | ** | erfüllt |
| Eisen | Fe | mg/l | 0.090 | 0.030 | 0.060 | k.Anford. | | k.Anford. | |
| Kobalt | Co | mg/l | -0.010 | -0.010 | -0.010 | 0.05 | erfüllt | 0.50 | erfüllt |
| Kupfer | Cu | mg/l | 0.030 | 0.050 | 0.040 | 0.2 | erfüllt | 0.50 | erfüllt |
| Nickel | Ni | mg/l | -0.010 | -0.010 | -0.010 | 0.2 | erfüllt | 2.0 | erfüllt |
| Quecksilber | Hg | mg/l | -0.0005 | -0.0005 | -0.0005 | 0.005 | erfüllt | 0.01 | erfüllt |
| Zink | Zn | mg/l | -0.050 | -0.050 | -0.050 | 1.0 | erfüllt | 10 | erfüllt |
| Zinn | Sn | mg/l | -0.1 | -0.1 | -0.1 | 0.2 | erfüllt | 2.0 | erfüllt |

| | | | | | | | | | |
|---|---|---|---|---|---|---|---|---|---|
| * Der ACX Gehalt ist ein Summenparameter für organische Halogenverbindungen. Diese Messung erfasst sowohl chlorierte Lösungsmittel, wie auch lipophile, schwerflüchtige organische Chlorverbindungen und Organochlorpestizide. | | | | | | | | | |
| ** Chrom-III = 0.0572 Chrom-VI = 0.01/0.1 | | | | | | | | | |

Negatives Vorzeichen bedeutet, dass der gemessene Wert unterhalb der analytischen Nachweisgranze liegt. Der angegebene Zahlenwert ist die Nachweisgrenze der entsprechenden Methode.

Die in der Tabelle angegebenen Werte wurden aus Probennahmen mehrerer Schmelzkörper gemäß dem nach dem erfindungsgemäßen Verfahren gewonnenen Produkt ermittelt, wobei Probenscheiben von 80 g zur Anwendung kamen. Grundlage für die Untersuchungen bildeten die Anforderungen der gegenwärtigen schweizerischen "Technischen Verordnung für Abfälle" (TVA) vom Dezember 1990. Die durch Stoffumwandlung erhaltenen Produkte stammen aus einem Hochtemperaturprozeß mit einer Temperatur von oberhalb 1700°C. Die Bestimmungen erfolgten unter Anwendung atomspektroskopischer Verfahren.

Die Resultate zeigen, daß Aluminium und Silizium die Hauptanteile der festen Reststoffe bilden. Alle Schwermetalle sind in derart geringen Konzentrationen vorhanden, daß sie unterhalb der Nachweisgrenze der angewendeten Meßmethoden liegen, zumindest jedoch weit unter den geforderten Eluatwerten hinsichtlich der Umweltverträglichkeit. Die Gesamtheit der Anforderungen an Inertstoffe bezüglich der TVA-Elemente ist erfüllt. Es ist praktisch keine Auslaugung festgestellt worden. Es handelt sich beim verfahrensmäßigen Produkt somit um ein vollständig inertes Material, welches den modernsten Umweltanforderungen auch hinsichtlich des Spurengehaltes möglicher toxischer Komponenten vollinhaltlich entspricht.

## Patentansprüche

1. Verfahren zur Nutzbarmachung von Abfällen durch vollständige Stoffumwandlung unsortiert einer thermischen Behandlung zugeführter, eine Vielzahl toxischer Komponenten enthaltender Entsorgungsgüter aller Art, wie Industrie-, Sonder-und Hausmüll, sowie Industriewracks, bei dem die verbleibende Gesamtheit der durch die thermische Vergasung anfallenden festen Reststoffe in schmelzflüssiger Form bei Temperaturen von ca. 1300°C ausgetragen und gegebenenfalls in ein Wasserbad granuliert wird,
dadurch **gekennzeichnet**,
daß die in schmelzflüssiger Form ausgetragenen, durch thermische Entgasung gewonnenen Reststoffe durchmischt und gegebenenfalls nach Abtrennung wenigstens eines Teils der metallischen Komponenten unter Verwendung der Energie der bei der Entgasung der Entsorgungsgüter gewonnenen Gase in eine zweite, die homogenen Strukturen und eluierbaren Reste beseitigende Hochtemperaturschmelze überführt wird, und
daß schließlich aus dieser Schmelze mit einem wesentlichen der ihr innewohnenden Energie vollständig inerte hochwertige Industrieprodukte in halbfertiger und/oder fertiger Form gewonnen werden.

2. Verfahren nach Anspruch 1,
dadurch gekennzeichnet, daß die zweite Hochtemperaturschmelze auf einer Temperatur von 1500°C bis 1800°C gehalten wird.

3. Verfahren nach Anspruch 1,
dadurch gekennzeichnet, daß die schmelzflüssig ausgetragenen Reststoffe der thermischen Entgasung in einem Sammelbehälter durchmischt werden.

4. Verfahren nach Anspruch 1,
dadurch gekennzeichnet, daß die Viskosität der Hochtemperaturschmelze produktabhängig eingestellt wird.

## Claims

1. Process for utilizing waste by complete conversion of waste materials of all types which contain a multiplicity of toxic components and are fed unclassified to a thermal treatment, such as industrial waste, special waste and domestic waste, and industrial scrap, in which all the remaining solid residues produced by the thermal gasification are discharged in molten form at temperatures of approximately 1300°C and if appropriate are granulated in a water bath, characterized in that the residues which are produced by thermal degassing and are discharged in molten form are mixed thoroughly and if appropriate after removal of at least some of the metallic components are converted, with utilization of the energy of the gases produced in the degassing of the waste materials, into a second high-temperature melt which eliminates the homogeneous structures and leechable residues, and in that finally, from this melt, completely inert high-grade industrial products are produced in semi-finished and/or finished form using essentially their inherent energy.

2. Process according to Claim 1, characterized in that the second high-temperature melt is held at a temperature of 1500°C to 1800°C.

3. Process according to Claim 1, characterized in that the residues of the thermal degassing discharged in molten form are mixed thoroughly in a collecting vessel.

4. Process according to Claim 1, characterized in that the viscosity of the high-temperature melt is set in a product-dependent manner.

## Revendications

1. Procédé de valorisation de déchets par la transformation complète des matériaux sans triage préalable par traitement thermique de déchets de toutes sortes contenant un grand nombre de composants toxiques, par exemple des déchets industriels, des déchets spéciaux et des déchets domestiques, ainsi que des épaves de marchandises, selon lequel la totalité des substances résiduelles solides produites après le dégazage est évacuée sous la forme d'une fusion liquide et ce, à une température de 1300 °C environ et, éventuellement, granulée dans un bain d'eau, caractérisé en ce que les substances résiduelles évacuées sous la forme d'une fusion fluide et obtenues par un dégazage thermique sont mélangées et, après une éventuelle séparation d'au moins une partie des composants métalliques en utilisant l'énergie des gaz récupérés lors du dégazage des déchets, transformées en une deuxième fusion à haute température éliminant les structures homogènes et les restes éluables et en ce que des produits industriels complètement inertes et de haute qualité, sous la forme de semi-produits et/ou de produits finis, sont finalement obtenus à partir de cette fusion et avec une partie essentielle de l'énergie inhérente de cette fusion.

2. Procédé selon la revendication 1, caractérisé en ce que la deuxième fusion à haute température est maintenue à une température comprise entre 1500 °C et 1800 °C.

3. Procédé selon la revendication 1, caractérisé en ce que les substances résiduelles du dégazage thermique se présentant sous la forme d'une fusion liquide sont mélangées dans un récipient collecteur.

4. Procédé selon la revendication 1, caractérisé en ce que la viscosité de la fusion à haute température est réglée en fonction du produit.
